# EUROPEAN PATENT APPLICATION

(11) **EP 3 970 817 A1**
(43) Date of publication of application: **23.03.2022**
(21) Application number: 20196581.1
(22) Date of filing: 17.09.2020
(51) Int. Cl.: A63F 13/25, G08C 17/02, H04N 21/422, G02B 27/01, G06F 3/01

(54) **HEAD MOUNTED DISPLAY AND CONTROL METHOD THEREOF**

(71) Applicant: XRSpace CO., LTD., Taoyuan City 330 (TW)
(72) Inventor: HUANG, Ching-Ning, 111 Taipei City (TW)
(74) Representative: Becker, Eberhard

(57) **Abstract**

A head mounted display (100) and a control method thereof are provided. In the method, a first equipment information is received from a first equipment (10), and a second equipment information is received from a second equipment (20). The first equipment (10) is identified as a first controllable equipment of the head mounted display (100), and the second equipment (20) is identified as a second controllable equipmen of the head mounted dispaly (100). Accordingly, multiple equipments can be identified and further controllable.

## Description

### TECHNICAL FIELD

The present disclosure generally relates to a control mechanism, in particular, to a head mounted display and a control method thereof.

### BACKGROUND

Nowadays, lots of electronic apparatuses (such as a game player, a computer, a smartphone, a smart appliance, etc.) can be remote-controlled by the user. For example, the user operates the application installed on the smartphone, a clean robot may start the cleaning operation. For another example, the user may select a movie on the computer, and a smart TV may play the selected movie.

On the other hand, technologies for simulating senses, perception, and/or environment, such as virtual reality (VR), augmented reality (AR), mixed reality (MR), and extended reality (XR), are popular nowadays. The aforementioned technologies can be applied in multiple fields, such as gaming, military training, healthcare, remote working, etc. In general, the user may wear a head mounted display to experience the virtual world. However, the user may merely operate virtual objects in the virtual world by the head mounted display system but not real objects in the real world. Some head mounted display systems may be further paired with a specific electronic apparatus and may further control the function of the electronic apparatus. However, these electronic apparatuses have been specified for the head mounted display system, so that merely one electronic apparatus is controllable by one system.

### SUMMARY OF THE DISCLOSURE

Accordingly, the present disclosure is directed to a head mounted display and a control method thereof, and multiple external apparatuses are controllable by the head mounted display.

In one of the exemplary embodiments, a control method of a head mounted display includes, but not limited to, the following steps. First equipment information is received from the first equipment. Second equipment information is received from second equipment. The first equipment is identified as the first controllable equipment of the head-mounted display. The second equipment is identified as the second controllable equipment of the head mounted display.

In one of the exemplary embodiments, a head mounted display includes, but not limited to, a memory and a processor. The memory stores a program code. The processor is coupled to the memory and loads the program code to perform: receiving first equipment information from the first equipment, receiving second equipment information from the second equipment, identifying the first equipment as the first controllable equipment of the head mounted display, and identifying the second equipment as the second controllable equipment of the head mounted display.

In light of the foregoing, according to the head mounted display and the control method thereof, two equipments can be identified as controllable equipments according to the received equipment information. Therefore, it is convenient for the user to control multiple external apparatuses by the head mounted display.

It should be understood, however, that this Summary may not contain all of the aspects and embodiments of the present disclosure, is not meant to be limiting or restrictive in any manner, and that the invention as disclosed herein is and will be understood by those of ordinary skill in the art to encompass obvious improvements and modifications thereto.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a block diagram illustrating a system according to one of the exemplary embodiments of the disclosure.
FIG. 2 is a flowchart illustrating a control method of a head mounted display according to one of the exemplary embodiments of the disclosure.
FIG. 3 is a schematic diagram illustrating multiple equipments according to one of the exemplary embodiments of the disclosure.
FIG. 4 is a flowchart illustrating a control procedure of the head mounted display according to one of the exemplary embodiments of the disclosure.
FIG. 5 is a schematic diagram illustrating multiple equipments according to one of the exemplary embodiments of the disclosure.

### DESCRIPTION OF THE EMBODIMENTS

Reference will now be made in detail to the presently preferred embodiments of the disclosure, examples of which are illustrated in the accompanying drawings. Wherever possible, the same reference numbers are used in the drawings and the description to refer to the same or like parts.

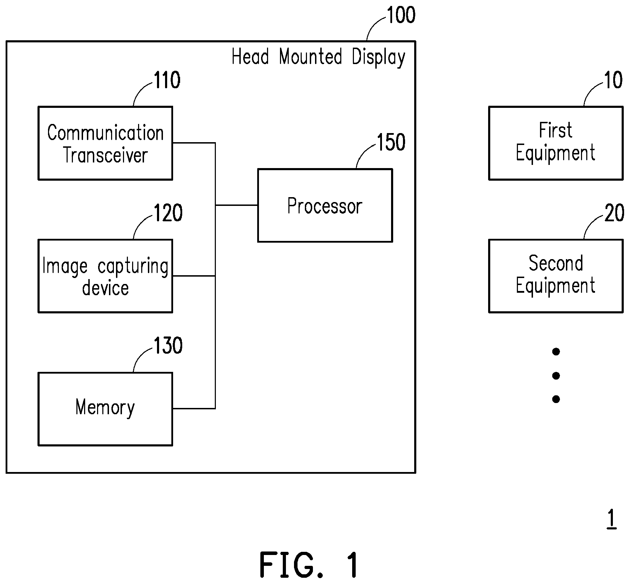

FIG. 1 is a block diagram illustrating a system 1 according to one of the exemplary embodiments of the disclosure. Referring to FIG. 1, the system 1 includes, but not limited to, a first equipment 10, a second equipment 20, and a head mounted display 100.

The first equipment 10 and the second equipment 20 could be appliances (such as a smart TV, a clean robot, or an air conditioner), computers, network equipments, smartphones, or other network-connectable devices. In one embodiment, the first equipment 10 and the second equipment 20 have a communication transceiver (not shown) configured with one or more communication protocols such as Wi-Fi, Bluetooth, Zigbee, or Z-Wave. In one embodiment, the first equipment 10 and the second equipment 20 provides one or more functions such as turning on/off, entering standby mode, changing strength, etc. In some embodiments, the first equipment 10 and the second equipment 20 allow other apparatuses remotely-control their functions.

It should be noticed that in some embodiments, the system 1 may further include more network-connectable devices.

The head mounted display 100 includes, but not limited to, a communication transceiver 110, an image capturing device 120, a memory 130, and a processor 150. The head mounted display 100 is adapted for VR, AR, MR, XR, or other reality simulation related technologies.

The communication transceiver 110 is configured with one or more communication protocols such as Wi-Fi, Bluetooth, Zigbee, or Z-Wave. In one embodiment, the communication transceiver 110 may use the corresponding communication protocol to transmit or receive signals with other devices such as the first equipment 10 and the second equipment 20.

The image capturing device 120 may be a camera, such as a monochrome camera or a color camera, a deep camera, a video recorder, or other image sensors capable of capturing images. In one embodiment, the image capturing device 120 is disposed on the main body of the head mounted display 100 and captures toward a specific direction. For example, when the user wears the head mounted display 100, the image capturing device 120 captures the scene in front of the user. In some embodiments, the direction and/or the field of view of the image capturing device 120 could be adjusted based on actual requirement.

The memory 130 may be any type of a fixed or movable random-access memory (RAM), a read-only memory (ROM), a flash memory, a similar device, or a combination of the above devices. The memory 130 records program codes, device configurations, buffer data, or permanent data (such as equipment information, positioning information, communication protocol, and images), and these data would be introduced later.

The processor 150 is coupled to the communication transceiver 110, the image capturing device 120, and the memory 130. The processor 150 is configured to load the program codes stored in the memory 130, to perform a procedure of the exemplary embodiment of the disclosure.

In some embodiments, the processor 150 may be a central processing unit (CPU), a microprocessor, a microcontroller, a digital signal processing (DSP) chip, a field-programmable gate array (FPGA). The functions of the processor 150 may also be implemented by an independent electronic device or an integrated circuit (IC), and operations of the processor 150 may also be implemented by software.

It should be noticed that the processor 150 may not be disposed at the same apparatus with the communication transceiver 110 the image capturing device 120. However, the apparatuses respectively equipped with the communication transceiver 110, the image capturing device 120, and the processor 150 may further include communication transceivers with compatible communication technology, such as Bluetooth, Wi-Fi, and IR wireless communications, or physical transmission line, to transmit or receive data with each other. For example, the processor 150 may be disposed in a computing device while the communication transceiver 110 the image capturing device 120 being disposed on the main body of the head mounted display 100.

To better understand the operating process provided in one or more embodiments of the disclosure, several embodiments will be exemplified below to elaborate the operating process of the head mounted display 100. The devices and modules in the head mounted display 100 are applied in the following embodiments to explain the control method provided herein. Each step of the method can be adjusted according to actual implementation situations and should not be limited to what is described herein.

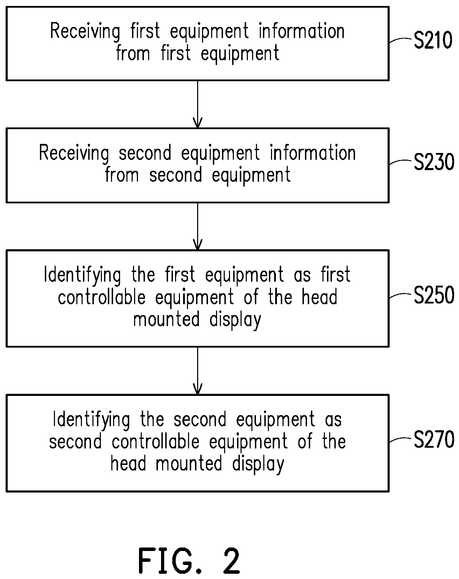

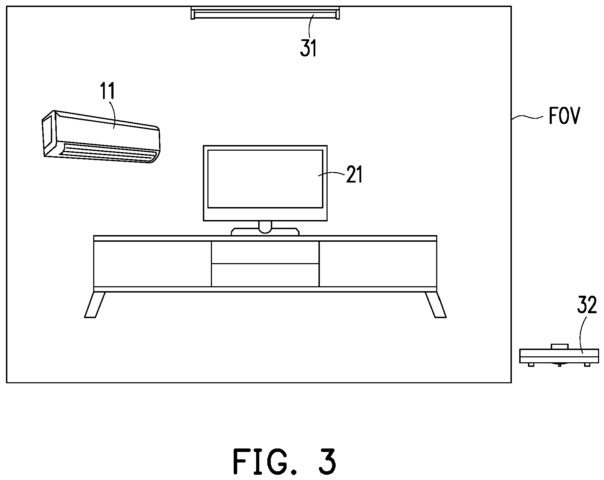

FIG. 2 is a flowchart illustrating a control method of the head mounted display 100 according to one of the exemplary embodiments of the disclosure. Referring to FIG. 2, the processor 150 may receive the first equipment information from the first equipment 10 (step S210). Specifically, it is assumed that the head mounted display 10 is mounted by a user, and the first equipment 10 and the second equipment 20 are placed in an environment where the user stays. For example, FIG. 3 is a schematic diagram illustrating multiple equipments according to one of the exemplary embodiments of the disclosure. Referring to FIG. 3, an air conditioner 11 (e.g., the first equipment 10), a TV 21 (e.g., the second equipment 20), a smart lamp 31, and a clean robot 32 are placed in a living room. What the user can see is generated based on one or more images obtained by the image capturing device 120. In the field of view FOV of the image capturing device 120, the user may see the air conditioner 11, the TV 21, and the smart lamp 31 in the display (not shown) of the head mounted display 100. There are many devices placed in the environment where the user stays. However, some devices may be controllable, but some devices may not be controllable.

The first equipment information could be used to identify the first equipment 10. In one embodiment, the first equipment information may indicate a first communication protocol. The first communication protocol is used by the first equipment 10 to make a communication with other devices. The first communication protocol could be Wi-Fi, Bluetooth, Zigbee, Z-Wave, or other wireless communication protocols. In some embodiments, the communication transceiver 110 is also configured with the first communication protocol. In one embodiment, the processor 150 may broadcast a discovery signal through the communication transceiver 110 with the first communication protocol, so that the first equipment 10 may receive and parse the discovery signal. The discovery signal may indicate the identity of the sender (e.g., the head mounted display 100) and/or the requested content such as connection establishment or access requirement. The first equipment 10 may further transmit a feedback signal in response to the discovery signal, to accept the requested content, or confirm the access of the head mounted display 100. In another embodiment, the discovery signal may be transmitted by the first equipment 10, and the processor 150 may transmit the feedback signal in response to the discovery signal through the communication transceiver 110. The processor 150 may further parse the discovery signal or the feedback signal to know the first communication protocol. For example, the type of protocol or the configuration of protocol. Then, the processor 150 may use the first communication protocol to establish a first wireless connection with the first equipment 10. For example, the communication transceiver 110 transmits a Wi-Fi signal to the first equipment 10.

In one embodiment, the first equipment information includes first protocol information, and the first protocol information indicates the first communication protocol will be used between the head mounted display 100 and the first equipment 10. For example, a discovery signal transmitted by the first equipment 10 can be received by the head mounted display 100, and the discovery signal includes the first protocol information. The first protocol information could be, for example, the type of protocol or the configuration of protocol.

In one embodiment, the first equipment information includes first positioning information, and the first positioning information indicates the relative position and/or the relative orientation between the head mounted display 100 and the first equipment 10. The relative position may relate to coordinates in three axes, and/or distance. The relative orientation may relate to 3-DoF information (such as roll, pitch, and yaw) and/or the direction from the head mounted display 100 to the first equipment 10.

In one embodiment, the processor 150 may determine the relative position between the head mounted display 100 and the first equipment 10 based on a signal strength of the feedback signal sent from the first equipment 10 to the head mounted display 100. The signal strength could be received signal strength indication (RSSI), received channel power indicator (RCPI), reference signal received power (RSRP), or the likes. It should be noted that the signal strength of the wireless signal is related to a relative distance between the transmitter (e.g., the first equipment 10) and the receiver (e.g., the head mounted display 100). The relative distance can further be used to determine the relative position between the head mounted display 100 and the first equipment 10.

In one embodiment, the processor 150 may obtain one or more images captured by the image capturing device 120 and identify the first equipment 10 from a target image select among these images. If the first equipment 10 is located within the field of view of the image capturing device 120, the image (called as the target image hereinafter) may include the first equipment 10. The processor 150 may identify the first equipment 10 in the target image through a machine learning technology (such as deep learning, artificial neural network (ANN), or support vector machine (SVM), etc.) configured with object recognition function. The processor 150 may further analyze the relative position and/or the relative orientation between the head mounted display 100 and the first equipment 10 according to the target image. For example, the sensing strength and the pixel position corresponding to the first equipment 10 in the target image then can be used for estimating depth information of the first equipment 10 (i.e., a distance relative to the head mounted display 100) and direction information from the head mounted display 100 to the first equipment 10. In one embodiment, the depth information and direction information could be determined as the relative position and the relative orientation between the head mounted display 100 and the first equipment 10. In another embodiment, the depth information and direction information determined based on the target image could be an analyzing result, and the processor 150 may adjust the first positioning information determined based on the wireless signal or other distance measure mechanisms according to the analyzing result. For example, the final first positioning information could be weighted calculation results of the relative positions and the relative orientations determined based on different sensing technologies. Therefore, the accuracy for estimating the positioning information can be improved.

In still one embodiment, the first equipment information includes an equipment type of the first equipment 10. The processor 150 may obtain the first identification from a feedback message or a discovery signal sent by the first equipment 10 through the communication transceiver 110 based on the first communication protocol. The first identification could be a serial number, product number, or other unique identification. The first identification of the first equipment 10 may be different from a second identification of the second equipment 20. The processor 150 may determine the equipment type of the first equipment 10 according to the first identification. For example, the equipment type could be the product type, the brand, the model type, the equipment size, or the equipment color. There is a relationship between the identification and the equipment type, and the processor 150 may use this relationship to distinguish different equipments or equipment types.

Also, the processor 150 may receive second equipment information from the second equipment 20 (step S230). Specifically, based on the aforementioned embodiments of step S210, in one embodiment, the second equipment information may indicate a second communication protocol or include second protocol information indicated the second communication protocol. Therefore, the processor 150 may establish a second wireless connection with the second equipment 20 through the communication transceiver 110 by using the second communication protocol. The detailed description of the second communication protocol and the second communication protocol may refer to the first communication protocol and the first communication protocol, respectively, and would be omitted. The first communication protocol is different from the second communication protocol. That is the communication transceiver 110 may be configured with two or more communication protocols.

In another embodiment, the second equipment information may include second positioning information, which indicates the relative position and the relative orientation between the head mounted display 100 and the second equipment 20. The detailed description of the second positioning information may refer to the first positioning information and would be omitted. Furthermore, in some embodiments, the second equipment information includes an equipment type of the second equipment 20. The processor 150 may determine the equipment type of the second equipment 20 according to the second identification from a feedback message or a discovery signal sent by the second equipment 20. The detailed description of the second identification and the equipment type may refer to the first identification and the aforementioned equipment type, respectively, and would be omitted.

The processor 150 may identify the first equipment 10 as the first controllable equipment of the head mounted display 100 (step S250). Specifically, the controllable equipment may provide other devices to control its functions. These other devices may use a corresponding communication protocol to transmit a control message, and the control message relates to the function of the controllable equipment. The function could be, for example, turning on/off the machine, switching modes, strength modification, specific motion, displaying information, or shopping. The processor 150 may use image recognition and/or the equipment type obtained from the wireless signal to identify the first equipment 10 and determine whether the first equipment 10 is recorded in a controllable list. The controllable list records one or more controllable equipments. If the first equipment 10 is recorded in the controllable list, the first equipment 10 would be determined as the first controllable equipment of the head mounted display 100. If the first equipment 10 is not recorded in the controllable list, the first equipment 10 would not be determined as the first controllable equipment of the head mounted display 100.

Also, the processor 150 may identify the second equipment 20 as the second controllable equipment of the head mounted display 100 (step S270). Specifically, the processor 150 may use image recognition or the equipment type obtained from the wireless signal to identify the second equipment 20 and determine whether the second equipment 20 is recorded in the controllable list. If the second equipment 20 is recorded in the controllable list, the second equipment 20 would be determined as the first controllable equipment of the head mounted display 100. If the second equipment 20 is not recorded in the controllable list, the second equipment 20 would not be determined as the second controllable equipment of the head mounted display 100.

In one embodiment, the processor 150 may further distinguish the first equipment 10 and the second equipment 20 according to the first protocol information and the second protocol information. The first protocol information and the second protocol information may indicate different communication protocols. That is, the first equipment 10 and the second equipment 20 use different communication protocols. The memory 130 may record the relationship between the equipment and its supported communication protocol. If the first equipment 10 and the second equipment 20 transmit feedback signal or discovery signal at the same time, the processor 150 may distinguish the equipments 10 and 20 according to the relationship and currently using communication protocols.

In another embodiment, the processor 150 may distinguish the first equipment 10 and the second equipment 20 according to the first positioning information and the second positioning information. In some situations, the first communication protocol may be the same as the second communication protocol. However, if the first positioning information is different from the second positioning information, that means there are two equipments located at different relative positions and/or different and relative orientations. Therefore, the first equipment 10 and the second equipment 20 could be distinguished based on different positioning information.

In one embodiment, the processor 150 may identify the first equipment 10 and/or the second equipment 20 merely if they are located in the field of view of the image capturing device 120. Taking FIG. 3 as an example, the processor 150 may identify the air conditioner 11, the TV 21, and the smart lamp 31 and determine whether these equipments are controllable equipments. In some embodiments, the processor 150 may identify the first equipment 10 and/or the second equipment 20 if the processor 150 can receive the wireless signal sent by the first equipment 10 and/or the second equipment 20.

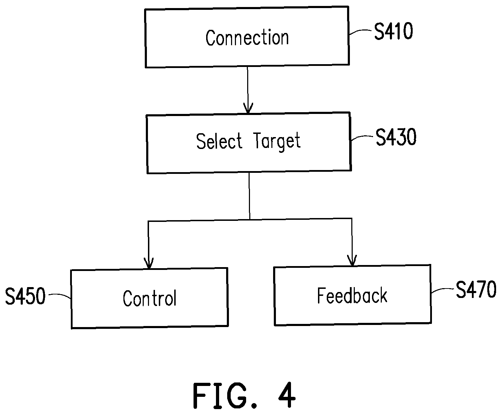

To further control the identified controllable equipment, FIG. 4 is a flowchart illustrating a control procedure of the head mounted display 100 according to one of the exemplary embodiments of the disclosure. Referring to FIG. 4, the processor 150 may establish the wireless connection with the first equipment 10 and/or the second equipment 20 by using the corresponding communication protocol (step S410). The wireless connection can be established before or after the controllable equipment is identified. The user may move or rotate his/her head, to browse the environment and search the equipment that the user wants to control.

The user may use a specific gesture, a gaze of the eyes, a voice command, or a handheld controller to select one of controllable equipment as the target to be controlled (step S430). The display of the head mounted display 100 may further present specific indication near to the identified controllable equipment, to help the user to know which equipment is controllable. Taking FIG. 3 as an example, the air conditioner 11 and the TV 21 are controllable equipments, and star signs (not shown) may be presented near to the air conditioner 11 and the TV 21 on the display. In some embodiments, the processor 150 may identify the equipment after the user selects the equipment.

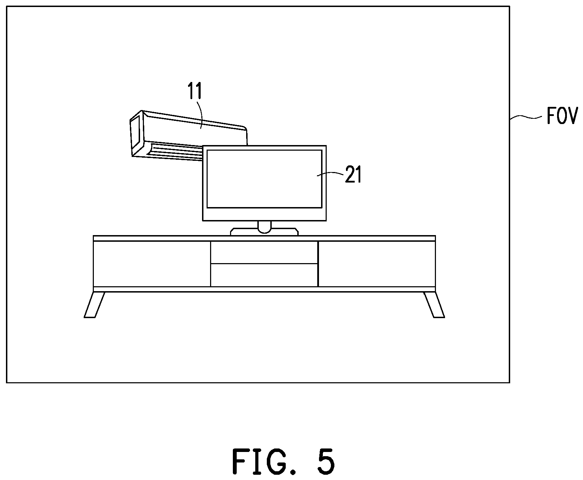

In one embodiment, the positioning information of the first equipment 10 or the second equipment 20 may be used to improve the accuracy of selection. FIG. 5 is a schematic diagram illustrating multiple equipments according to one of the exemplary embodiments of the disclosure. Referring to FIG. 5, it is assumed the user sits on a seat. In the field of view FOV of the image capturing device 120, the air conditioner 11 may be located behind the TV 21. The processor 150 may determine where the end of the ray cast pointed by the user is located and determine whether the position of the end of the ray cast is conformed with the positioning information of the air conditioner 11 or the TV 21.

After the target is determined, if the first equipment 10 is selected, the processor 150 may control the function of the first equipment 10 and perform a first function of the first equipment 10 according to the first input of the user mounting the head mounted display 100 (step S450). The first function is operated on the first equipment 10. The function could be, for example, turning on/off the machine, switching modes, strength modification, specific motion, displaying information, or shopping. The user may use a specific gesture, a voice command, or a handheld controller (i.e, the input of the user) to determine one of the functions. For example, the wave gesture is used for turning off the TV 21. For another example, the throwing motion of the hand is used for buying water in the vending machine. Then, the processor 150 may transmit a control message to the first equipment 10 through the communication transceiver 110 by using the first communication protocol. The control message indicates the selected function. Also, if the second equipment 20 is selected, the processor 150 may control the function of the second equipment 20 and perform a second function of the second equipment 20 according to a second input of the user mounting the head mounted display 100. The second function would be operated on the second equipment.

In one embodiment, the head mounted display 100 may request the first equipment 10 or the second equipment 20 to feedback information (step S470). The information provided by the first equipment 10 or the second equipment 20 may be the status information or a response message in response to the control message of the function. For example, the purchase result may be provided to the head mounted display 100 if the user remotely buys a product in the vending machine.

In one embodiment, the first equipment 10 may transmit the response message in response to the control message of the function, and the head mounted display 100 may forward the response message to the second equipment 20. The response message indicates another target is the second equipment 20. Then, one function may be operated on the second equipment 20 after receiving the response message. For example, when the TV 21 is turned on, a response message would be transmitted to air conditioner 11 via the head mounted display 100 to turn on the air conditioner 11, too. Therefore, even the first equipment 10 and the second equipment 20 are configured with different communication protocols, they can communicate with each other via the head mounted display 100.

In summary, the exemplary embodiments described above depicted the head mounted display and the control method thereof. Two equipments configured with different communication protocols can be identified as controllable equipments according to the received equipment information, respectively. Therefore, it is convenient for the user to control multiple external apparatuses by the head mounted display.

## Claims

1. A control method of a head mounted display (100), **characterized by** comprising:
receiving a first equipment information from a first equipment (10);
receiving a second equipment information from a second equipment (20);
identifying the first equipment (10) as a first controllable equipment of the head mounted display (100); and
identifying the second equipment (20) as a second controllable equipment of the head mounted display (100).

2. A head mounted display (100), comprising:
a memory (130), storing a program code; and
a processor (150), coupled to the memory (130), **characterized in that** the processor (150) loads the program code to perform:
receiving a first equipment information from a first equipment (10);
receiving a second equipment information from a second equipment (20);
identifying the first equipment (10) as a first controllable equipment of the head mounted display (100); and
identifying the second equipment (20) as a second controllable equipment of the head mounted display (100).

3. The control method of claim 1, **characterized by** further comprising:
establishing a first wireless connection with the first equipment (10);
performing a first function of the first equipment (10) according to a first input of a user mounting the head mounted display (100), wherein the first function is operated on the first equipment (10);
establishing a second wireless connection with the second equipment (20); and
performing a second function of the second equipment (20) according to a second input of the user mounting the head mounted display (100), wherein the second function is operated on the second equipment (20), or the head mounted display (100) of claim 2, **characterized by** further comprising:
a communication transceiver (110), coupled to the processor (150), and used for transmitting or receiving signals, wherein the processor (150) is further configured for:
establishing, through the communication transceiver (110), a first wireless connection with the first equipment (10);
performing a first function of the first equipment (10) according to a first input of a user mounting the head mounted display (100), wherein the first function is operated on the first equipment (10);
establishing, through the communication transceiver (110), a second wireless connection with the second equipment (20); and
performing a second function of the second equipment (20) according to a second input of the user mounting the head mounted display (100), wherein the second function is operated on the second equipment (20).

4. The control method of claim 3,
**characterized in that** the first equipment information indicates a first communication protocol, and the step of establishing the first wireless connection with the first equipment (10) is performed by using the first communication protocol;
wherein the second equipment information indicates a second communication protocol, and the step of establishing the second wireless connection with the second equipment (20) is performed by using the second communication protocol, or the head mounted display (100) of claim 3,
**characterized in that** the first equipment information indicates a first communication protocol, and the communication transceiver (110) establishes the first wireless connection with the first equipment (10) by using the the first communication protocol;
wherein the second equipment information indicates a second communication protocol, and the communication transceiver (110) establishes the second wireless connection with the second equipment (20) by using the second communication protocol.

5. The control method of claim 4,
**characterized in that** the first equipment information comprises a first protocol information, the first protocol information indicates the first communication protocol will be used between the head mounted display (100) and the first equipment (10);
wherein the second equipment information comprises a second protocol information, the second protocol information indicates the second communication protocol will be used between the head mounted display (100) and the second equipment (20);
wherein the first equipment (10) and the second equipment (20) are distinguished by the head mounted display (100) according to the first protocol information and the second protocol information, or the head mounted display (100) of claim 4,
**characterized in that** the first equipment information comprises a first protocol information, the first protocol information indicates the first communication protocol will be used between the head mounted display (100) and the first equipment (10);
wherein the second equipment information comprises a second protocol information, the second protocol information indicates the second communication protocol will be used between the head mounted display (100) and the second equipment (20);
wherein the processor (150) distinguishes the first equipment (10) and the second equipment (20) according to the first protocol information and the second protocol information.

6. The control method of claim 1,
**characterized in that** the first equipment information comprises a first positioning information, the first positioning information indicates at least one of relative position and relative orientation between the head mounted display (100) and the first equipment (10);
wherein the second equipment information comprises a second positioning information, the first positioning information indicates at least one of relative position and relative orientation between the head mounted display (100) and the second equipment (20), or the head mounted display (100) of claim 2,
**characterized in that** the first equipment information comprises a first positioning information, the first positioning information indicates at least one of the relative position and the relative orientation between the head mounted display (100) and the first equipment (10);
wherein the second equipment information comprises a second positioning information, the first positioning information indicates at least one of the relative position and the relative orientation between the head mounted display (100) and the second equipment (20).

7. The control method of claim 6,
**characterized in that** the relative position between the head mounted display (100) and the first equipment (10) is determined based on a signal strength of a feedback signal sent from the first equipment (10) to the head mounted display (100);
wherein the relative position between the head mounted display (100) and the second equipment (20) is determined based on a signal strength of a feedback signal sent from the second equipment (20) to the head mounted display (100), or the head mounted display (100) of claim 6,
**characterized in that** the processor (150) determines the relative position between the head mounted display (100) and the first equipment (10) based on a signal strength of a feedback signal sent from the first equipment (10) to the head mounted display (100);
wherein the processor (150) determines the relative position between the head mounted display (100) and the second equipment (20) based on a signal strength of a feedback signal sent from the second equipment (20) to the head mounted display (100).

8. The control method of claim 6, **characterized by** further comprising:
obtaining one or more images from an image capturing device (120) mounted on the head mounted display (100);
identifying the first equipment (10) from a target image selected among the one or more images;
analysing the at least one of the relative position and the relative orientation between the head mounted display (100) and the first equipment (10) according to the target image; and
adjusting the first positioning information according to the analysing result, or the head mounted display (100) of claim 6, **characterized by** further comprising:
an image capturing device (120), coupled to the processor (150), and obtaining one or more images, and the processor (150) is further configured for:
identifying the first equipment (10) from a target image selected among the one or more images;
analysing the at least one of the relative position and the relative orientation between the head mounted display (100) and the first equipment (10) according to the target image; and
adjusting the first positioning information according to the analysing result.

9. The control method of claim 6,
**characterized in that** the first equipment (10) and the second equipment (20) are distinguished by the head mounted display (100) according to the first positioning information and the second positioning information, or the head mounted display (100) of claim 6, **characterized in that** the processor (150) is further configured for:
distinguishing the first equipment (10) and the second equipment (20) according to the first positioning information and the second positioning information.

10. The control method of claim 1, **characterized by** further comprising:
obtaining one or more images from an image capturing device (120) mounted on the head mounted display (100);
identifying the first equipment (10) from a target image selected among the one or more images; and
analysing the at least one of the relative position and the relative orientation between the head mounted display (100) and the first equipment (10) according to the target image, or the head mounted display (100) of claim 2, **characterized by** further comprising:
an image capturing device (120), coupled to the processor (150), and obtaining one or more images, and the processor (150) is further configured for:
obtaining one or more images from an image capturing device (120) mounted on the head mounted display (100);
identifying the first equipment (10) from a target image selected among the one or more images; and
analysing the at least one of the relative position and the relative orientation between the head mounted display (100) and the first equipment (10) according to the target image.

11. The control method of claim 1, **characterized in that** the first equipment information comprises an equipment type of the first equipment (10), and the step of receiving the first equipment information comprises:
obtaining a first identification from a feedback message sent by the first equipment (10), wherein the first identification of the first equipment (10) is different from a second identification of the second equipment (20), and the feedback message is transmitted based on a first communication protocol; and
determining the equipment type of the first equipment (10) according to the first identification, or the head mounted display (100) of claim 2, **characterized in that** the first equipment information comprises an equipment type of the first equipment (10), and the processor (150) is further configured for:
obtaining, through the communication transceiver (110), a first identification from a feedback message sent by the first equipment (10), wherein the first identification of the first equipment (10) is different from a second identification of the second equipment (20), and the feedback message is transmitted based on a first communication protocol; and
determining the equipment type of the first equipment (10) according to the first identification.
